## Europäisches Patentamt
## European Patent Office
## Office européen des brevets

(11) Publication number: **0 072 590**
**B1**

(12) **EUROPEAN PATENT SPECIFICATION**

(45) Date of publication of patent specification: **10.12.86**

(21) Application number: **82200986.6**

(22) Date of filing: **03.08.82**

(51) Int. Cl.⁴: **B 07 B 1/46,** B 07 B 1/42, B 01 D 35/20, B 03 B 7/00

(54) **Vibrating dewatering screen for an apparatus for recovery of particulate matter from suspension.**

(30) Priority: **15.08.81 GB 8125002**

(43) Date of publication of application:
**23.02.83 Bulletin 83/08**

(45) Publication of the grant of the patent:
**10.12.86 Bulletin 86/50**

(84) Designated Contracting States:
**BE DE FR**

(56) References cited:
**DE-A-2 033 215**
**FR-A-1 315 733**
**FR-A-2 281 154**
**GB-A- 234 739**
**US-A-3 124 530**

(73) Proprietor: **Derek Parnaby Cyclones International Limited**
**Chilton Industrial Estate**
**Ferryhill County Durham DL17 OPB (GB)**

(72) Inventor: **Parnaby, Derek**
**Whitworth Hall**
**Nr Spennymoor County Durham DL16 7QX (GB)**

(74) Representative: **Virr, Dennis Austin et al**
**Reid Sharpe Floor B Milburn House Dean Street**
**Newcastle upon Tyne NE1 1LE (GB)**

Courier Press, Leamington Spa, England.

## Description

This invention relates to a vibrating dewatering screen such as a rundown filtering screen.

Cyclone separator apparatuses are used to separate coarse or light fractions from fine or dense fractions, for example in sorting coal or coke lumps from dust, or other particulate materials. In sorting coal lumps from dust, since finely divided coal material or "dust" is suitable for use in fluidised bed furnaces for example, this part of material is worth recovering if the same can be done economically. In other fields, such as the preparation of china clay for use, the desired product is a very fine powder whilst coarser particles and aggregates require recycling to be broken up further. In order to be used, however, the fines must be recovered from the usually aqueous suspension in which they leave the cyclone separator.

Coarser particles can be relatively easily dewatered since these are not generally in suspension, and are not usually hydraulically bound by surface tension of water into larger aggregates. A simple sieve arrangement can suffice to dewater such particles, and the particles dried by exposure to natural or artificial drying means. Dewatering of fine suspended particles is more difficult, and the fine mesh sizes of screens necessary to retain the particles are prone to be blocked by water retained in the mesh by surface tension. Surface tension also binds particles into larger aggregates with a considerable amount of water included by capillary action.

In using the screen, water containing fines is run down over the screen which is for example inclined or curved, the water running through the screen, and particles above a given dimension discharged after running from the bottom of the screen.

From United States Patent No. 3124530 it is known to vibrate a flexible filter mesh positioned in an inclined position with a degree of slack between the ends thereof, the lower end being resiliently supported and a vibrator being attached to the lower end of the mesh. French Patent No. 2281154 describes a separator which comprises an inclined flat filter screen, pivoted at its upper end to permit the angle of the filter screen to the horizontal to be varied.

An object of the invention is to provide a dewatering screen which gives an improvement in the efficiency of dewatering and reduction of the occurrence of aggregations of particles which may include particles which would otherwise be rejected by the screens.

In accordance with the invention, a dewatering screen having a concavely curved foraminous screen part which is mounted with one end higher than the opposite end thereof so as to be generally inclined from the upper end to the lower end thereof, the lower end thereof being resiliently supported, and vibrating means for vibrating said curved foraminous screen part, is characterised in that the upper end of said screen part is pivotally mounted on a horizontally extending shaft and in that the lower end of said screen part is supported by compression springs and a block of resilient material between said lower end and said compression springs.

Vibration of the screen serves to break the surface tension of water thus breaking up any aggregations of particles which may form so that water which might otherwise be included in such aggregates beyond the minimal quantity wetting the individual particles is removed.

The means for vibrating the screen may comprise a pair of electro-magnetic vibrators, operating by rapid field reversal or on/off switching to produce rapid vibration of an armature mechanically connected to a part of the screen, or alternatively comprise a pair of out of balance rotating shafts. These shafts would be unbalanced by weighting the shafts or a flywheel to one side so that a lurch will occur with each rotation of the shaft. The shafts preferably are weighted and rotate in synchronism, so that they reinforce rather than cancel each other. The upper end of the curved screen part is pivotally mounted on a horizontally extending shaft which permits pivoting rotation of the screen. The shaft may be provided with friction absorbing sleeves over the pivot mounting at each side of the screen.

The resilient support for the lower end of the concavely curved foraminous screen part comprises compression springs and a block of resilient material such as rubber between the screen part and the springs. Preferably a water collecting structure is provided below the screen for collecting water and any rejected particles having an outflow conduit leading to a settling tank or other discharge point. An overflow chute is associated with the lower end of the screen for discharge of retained particles, for example onto a belt leading to a further treatment or storage stage.

The screen itself is formed of parallel wires or mesh and may for example be designed to retain particles in the range from below 0.25 mm towards zero.

The further screen means may each be a flat reciprocating screen, located directly above the settling tank, so that any further liquor and particles rejected by the screen fall directly into the tank. The inlet for unsorted material may be located somewhat above an outlet for effluent liquor which defines a generally maintained level for liquor in the settling tank.

The spigot (coarse or low density) output of the cyclone or cyclones may be fed onto a reciprocating, or stationary, horizontal flat screen, with a collecting tank below with a connection to effluent. The liquor drained through the screen should have no significant inclusions of fine particles due to the efficiency of cyclone operation, but the effluent can be directed to the settling tank if it is believed that a valuable quantity of fines can be recovered in this way.

A preferred embodiment of dewatering screen according to the invention will now be described by way of example, with reference to the accompanying drawings wherein:—

Fig. 1 is a side view of a dewatering screen according to the invention, Fig. 2 is a view of the screen from above,

Fig. 3 is a frontal view of the screen and,

Fig. 4 is a flow diagram of a fines separating apparatus incorporating the dewatering screen.

As shown in the drawings, a dewatering screen 1 comprises an inlet, feed chute, or header box 2, which receives outflow of fines and water from a cyclone separator, or barrel-type separating apparatus. The flow proceeds along arrow A through orifice 2a onto a curved inclined screen 3. The curvature of screen 3 presents its concave face to flow of material to be screened, and the inclination of the screen decreases towards the bottom of the screen, the upper end of the screen approaching vertical, and the lower end approaching horizontal. The screen 3 is fenced at each side by walls 4 which prevent spillage over the lateral edges of the screen. A frusto-conical tank 5 is disposed below the screen 3 to collect water passing through the screen, and the tank 5 has an outlet duct 9 which may be connected to a settling tank or other storage or disposal point. The screen 3 and tank 5 are supported by a framework consisting of rear vertical members 6, and front 8 and rear beams 7.

A vibrator unit 10, comprising two axially parallel vibrators is mounted on beams 11 extending between the walls 4 so as to communicate vibrations from the unit 10 to the screen 3. Each vibrator composing the unit 10 may be an electro-magnet which either by on-off switching, or pole reversal causes an armature to reciprocate rapidly, e.g. with a frequency in the order of 10 cycles per second (10Hz). Alternatively each vibrator may comprise an electric motor driving an eccentrically loaded shaft or flywheel which causes "knocking" of the shaft, or the shaft may be cranked or carry a cam. The vibrators forming the unit 10 preferably are synchronised, so that they reinforce each other.

The screen 3 is supported at the bottom by a pair of spring assemblies 12 comprising compression springs, with the screen mounted thereon through rubber pads 12a. This serves to provide a resilient mounting and minimise the transmission of vibration to the frame of the screen.

The upper end of screen 3 is pivotally mounted on a horizontally extending shaft 13, which is provided with friction absorbing sleeves 14 of for example rubber over the shaft at the pivot mounting for the screen toward each end of the shaft 13.

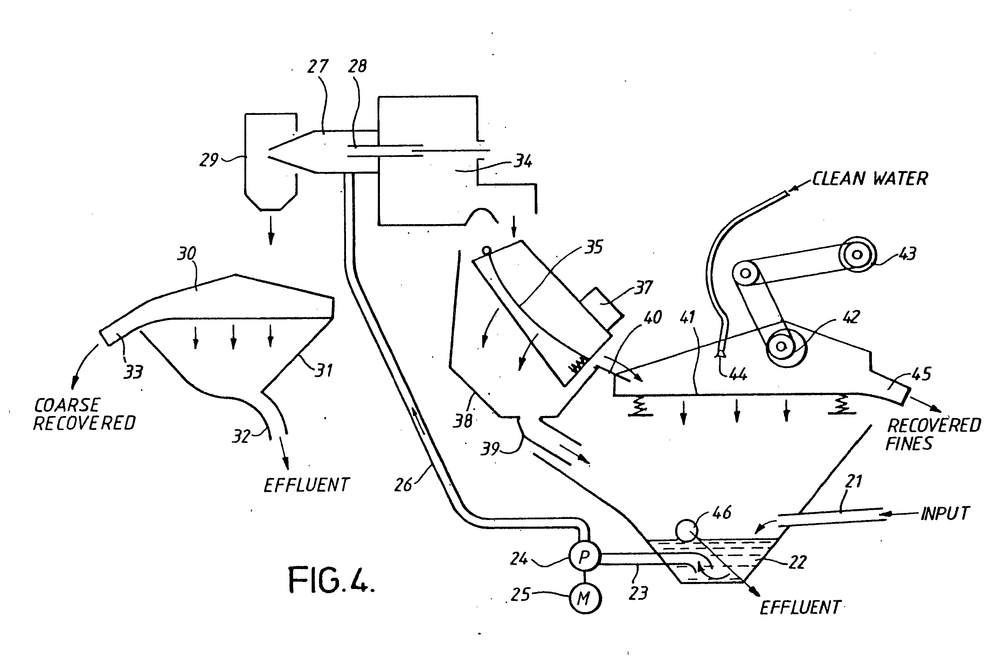

In use, see Fig. 4 the "fines" output of a cyclone separator for example is fed into the header box 2, following arrow A, and cascades through orifice 2a onto the screen 3 which is caused to vibrate continuously by the vibrator unit 10. Without vibration, the bulk of water would flow through the mesh of the screen together with particles too small to be retained by the screen, and the bulk of the particles, together with wetting water clinging to the particles by surface tension would be retained by the screen. The surface tension of the water wetting the particles however not only retains water thus, but also causes the particles to aggregate and form larger water bound masses which retain water by capillary action, and thus the unvibrated mass of retained particles on the screen would contain a considerable quantity of water, greater than required to wet all the particles present. Lack of vibration also causes the mesh of the screen to be clogged with water at mesh sizes in the order of 1/1000th inch (0.0254 mm) or less.

Vibration causes particle aggregates to break up and shed water which might be bound in the aggregates, and also dislodges any water which might clog the mesh of the screen due to surface tension. Continuous vibration of the screen therefore much increases the efficiency of dewatering and enables very fine mesh screens to be used for separating very fine suspensions from water such as ash, potters clay or silt.

The water and rejected particles pass through the screen 3 and fall into the tank 5, and are fed following arrow C to a settling tank or other disposal or storage location. The retained particles move down the screen 3 under the influence of the vibration and are discharged from the lower end of the screen following arrow B, for example onto a belt conveyor to be taken to a location for further processing — e.g. by drying, or for storage or disposal.

The screen 3 may be of mesh comprising intersecting wires, or a grid or parallel wires with separations which enable retention of particles with diameters of fractions of a thousandth of an inch and may be constructed to the limit of ability to construct fine mesh screens.

As shown in Fig. 4, unsorted input material is introduced to the apparatus through feed pipe 21 opening into settling tank 22, where the material settles through a pond of liquor. Any buoyant or scum-forming material is floated off on the surface of the pond. The material is extracted with liquor through a syphon 23, by pump 24 powered by motor 25 and fed via pipe 26 to a tangential inlet of a cyclone separator 27. The cyclone separator 27 operates in known manner, with the particle size or density separation criterion being adjustable by a vortex finder 28, or by other means such as a valve to vary back pressure in the separator, or a spear valve in the conical end of the separator. Coarser material separated in the vortex is discharged from the conical end of the separator 27 into a spigot box 29 from which the material drops onto a dewatering screen 30. Liquor drained from the material collects in a funnel shaped trap 31, and then is fed to effluent by conduit 32. Conduit 32 may be fed to the settling tank 22 if it is considered or found that significant quantities of fines particles are included in the liquor passed through screen 30. The coarse material is then fed via chute 33 to a coarse material recovery point, where it is gathered for transport, disposal processing or reprocessing as appropriate.

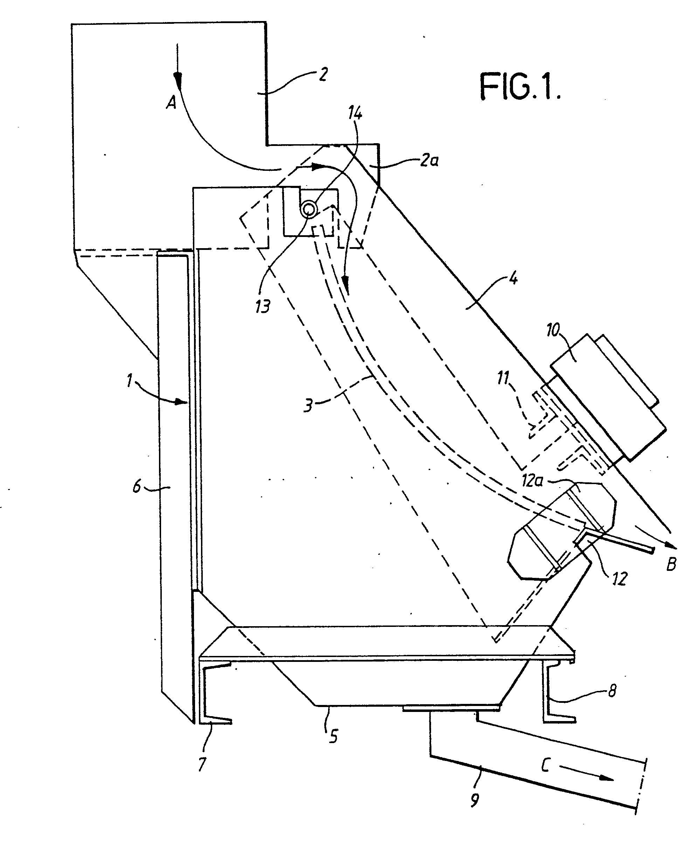

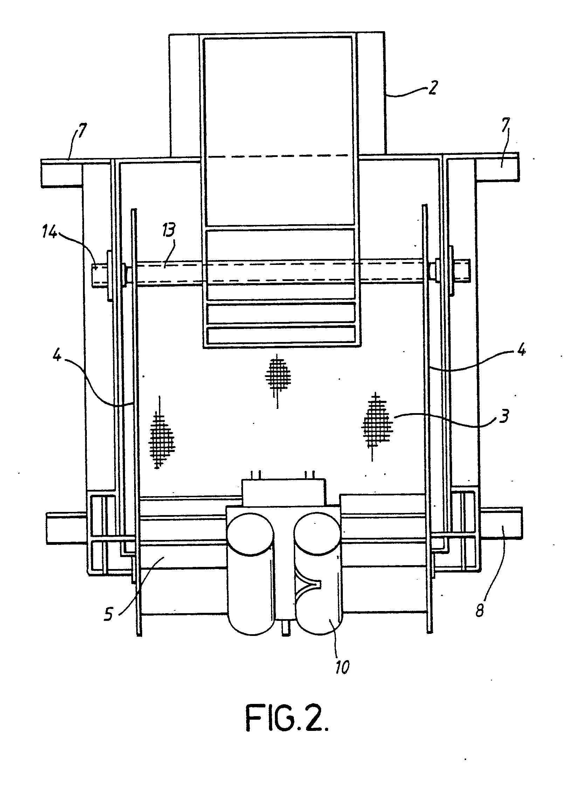

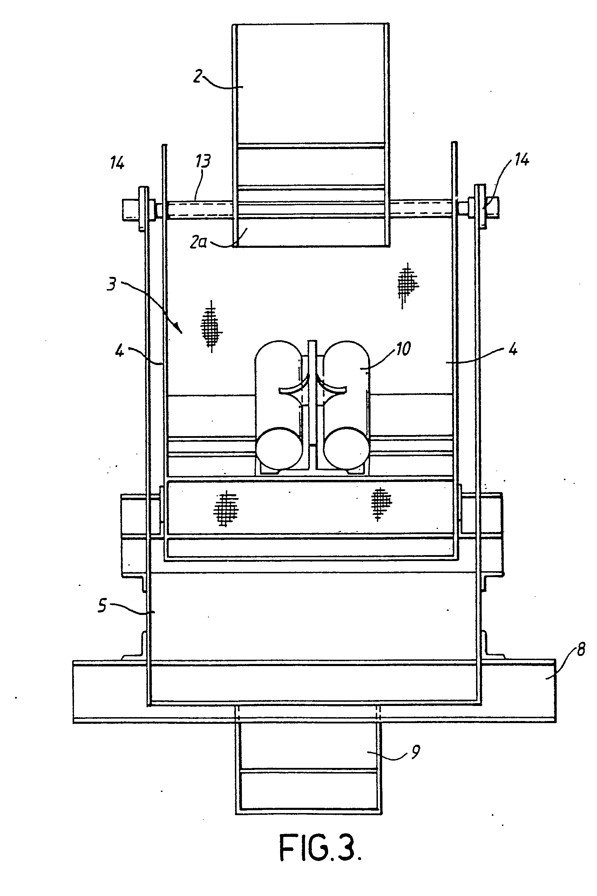

The fines fraction is discharged from the vortex finder tube 8 into a header box 34 and thence cascades over an inclined vibratory dewatering screen 35. This is constructed in accordance with Figs. 1 to 3 above, and comprises a close mesh screen designed to retain particles of 0.25 mm or less in diameter, pivoted at 36 and vibrated by vibrator unit 37 to prevent aggregation of particles and clogging of the mesh by water due to surface tension. The liquor and any suspended particles passing through screen 35 is caught in a generally frusto-conical collecting trap 38 and fed by conduit 39 to the settling tank 22, where any suspended particles are allowed to settle out of the liquor.

The retained particles are fed via chute 40 onto a horizontal flat vibratory dewatering screen 41, which is vibrated by an excentric 42 driven by pulleys from motor 43. On screen 41, the particles are subjected to washing by clean water via spray nozzles 44, the water and any rejected particles passing through the screen into the settling tank 22. The vibration of the screen 41 again prevents clogging of the very fine mesh required to retain the fines particles by water through surface tension. The washed fines particles are finally discharged from the end of the screen 41 via chute 45 to be collected for further use.

The top of the liquor in settling tank 22 is drained off via conduit 46 for disposal as effluent, with any scum of floating debris, but without any substantial contamination by suspended fines particles.

The apparatus described is for example of utility in separating coal dust which is suitable for use in fluidised bed furnaces, from coal gravel which is more suitable for burning in other types of furnace. The apparatus can also be used for minerals separation where either both fractions are of value, or where the valuable fraction is the high density/fine fraction and for separating material which has been properly powdered and thus suitable for use in the next stage of a process from material which has not been so powdered, and needs to be returned for correct processing.

**Claims**

1. A dewatering screen having a concavely curved foraminous screen part (3) mounted with one end higher than the opposite end thereof so as to be generally inclined from the upper end to the lower end thereof, the lower end thereof being resiliently supported, and vibrating means (10) for vibrating said curved foraminous screen part, characterised in that the upper end of said curved foraminous screen part (3) is pivotally mounted on a horizontally extending shaft (13) and in that the lower end of said curved foraminous screen part (3) is supported by compression springs (12) and a block of resilient material (12a) between said lower end and said compression springs.

2. A dewatering screen according to claim 1, characterised in that the horizontally extending shaft (13) is provided with friction absorbing sleeves (14) at the pivot mounting for the curved foraminous screen part (3).

**Patentansprüche**

1. Entwässerungssieb, bestehend aus einem konkav gebogenen, durchlöcherten Siebteil (3), das mit einer Seite höher als mit der anderen Seite angeordnet ist, so daß er im allgemeinen träg vom oberen zum unteren Ende verläuft, wobei das untere Ende elastisch unterstützt ist und wobei eine Vibriereinrichtung (10) zur Vibration des genannten, durchlöcherten Siebteiles vorgesehen ist, dadurch gekennzeichnet, daß das obere Ende des genannten, gekrümmten, durchlöcherten Siebteiles (3) schwenkbar an einer sich horizontal erstreckenden Welle (13) befestigt ist und das untere Ende des genannten, gekrümmten, durchlöcherten Siebteiles (3) durch Druckfedern (12) und einen Block von elastischem Material (12a) zwischen dem genannten unteren Ende und den genannten Druckfedern unterstützt ist.

2. Entwässerungssieb nach Anspruch 1, dadurch gekennzeichnet, daß die sich horizontal erstreckende Welle (13) mit die Reibung aufnehmenden Muffen (14) an der Drehbefestigung für das gekrümmte, durchlöcherte Siebteil (3) versehen ist.

**Revendications**

1. Tamis d'égouttage pourvu d'un écran foraminé courbe de forme concave (3) installé de sorte qu'une de ses extrémités soit plus haute par rapport à son extrémité opposée, de manière à ce qu'il soit généralement incliné de l'extrémité supérieure vers son extrémité inférieure, son extrémité inférieure étant supportée de manière élastique, et de moyens de vibration (10) destinés à faire vibrer l'écran foraminé courbe, caractérisé en ce que l'extrémité supérieure dudit écran foraminé courbe (3) est montée à rotation sur un arbre horizontal (13) et en ce que l'extrémité inférieure dudit écran est supportée par des ressorts de compression (12) et un tampon de matière élastique (12a) placé entre ladite extrémité inférieure et lesdits ressorts de compression.

2. Tamis d'égouttage suivant la revendication 1, caractérisé en ce que l'arbre horizontal (13) est muni de douilles (14) absorbant les frottements à l'assemblage pivotant de l'écran foraminé courbe.

0 072 590

FIG.1.

FIG.2.

FIG.3.

FIG.4.